# EUROPÄISCHE PATENTSCHRIFT

(11) **EP 3 064 404 B1**
(45) Veröffentlichungstag und Bekanntmachung des Hinweises auf die Patenterteilung: **18.04.2018**
(21) Anmeldenummer: 16153638.8
(22) Anmeldetag: 01.02.2016
(51) Int. Cl.: B60R 25/24, G07C 9/00

(54) **FUNKTIONSABSCHALTUNG FÜR EIN FAHRZEUGZUGANGSSYSTEM**
FUNCTION SHUTDOWN FOR AN ENTRY SYSTEM FOR A VEHICLE
INTERRUPTION FONCTIONNELLE D'UN SYSTEME D'ACCES DE VEHICULE

(30) Priorität: 02.03.2015 DE 102015203661
(43) Veröffentlichungstag der Anmeldung: 07.09.2016
(73) Patentinhaber: Volkswagen Aktiengesellschaft, 38440 Wolfsburg (DE)
(72) Erfinder: Koch, Gerald, 38268 Lengede (DE); Revermann, Klaus, 38440 Wolfsburg (DE)

(56) Entgegenhaltungen:
- EP-A2- 0 908 589
- WO-A1-2012/017214
- DE-A1-102011 001 226
- DE-A1-102011 116 209
- DE-A1-102013 221 371
- GB-A- 2 340 169
- GB-A- 2 426 102
- JP-A- H10 231 651
- JP-A- H11 241 540
- US-A1- 2015 048 927

## Beschreibung

Die Erfindung bezieht sich auf eine Funktionsabschaltung bei Fahrzeugzugangssystemen und insbesondere auf ein mobiles Gerät zum Betätigen einer Sperrvorrichtung eines Fahrzeugzugangssystems sowie ein entsprechendes Verfahren und ein entsprechendes System.

Bei Fahrzeugzugangssystemen werden häufig Sperrvorrichtungen benutzt, die ein drahtloses Öffnen des Fahrzeugs über ein mobiles Gerät, beispielsweise einen Funkschlüssel, erlauben. Dabei existieren sowohl Systeme, bei denen das mobile Gerät aktiv betätigt werden muss als auch solche Systeme, bei denen das Öffnen des Fahrzeugs automatisch ohne aktive Betätigung des mobilen Geräts erfolgt.

Bisherige Fahrzeugzugangssysteme nutzen häufig Sperrvorrichtungen, über die der Benutzer drahtlos über einen Impulsgeber im Fahrzeugschlüssel und Näherungssensoren im Fahrzeug das Fahrzeug öffnen kann. Dabei kann der Fahrer über eine Betätigungsvorrichtung auf dem Schlüssel, beispielsweise eine Taste, das Fahrzeug sperren oder entsperren. Darüber hinaus existieren auch Vorrichtungen, bei denen der Fahrer den Fahrzeugschlüssel mit sich führt und nur durch Berühren der Türgriffe oder anderer Teile des Fahrzeugs das Fahrzeug entsperrt, ohne dass er aktiv den Funkschlüssel bedient. Dies bietet dem Fahrer ein Höchstmaß an Komfort, da der Schlüssel zwar mitgeführt, aber nicht in die Hand genommen werden muss.

Wichtig für derartige Fahrzeugzugangssysteme ist eine Verhinderung von ungewollten Entsperrungen des Fahrzeugs durch unberechtigte Personen, um so einen unerwünschten Zugang zum Fahrzeug oder sogar einen Diebstahl des Fahrzeugs zu unterbinden.

In der DE 4020445 A1 wird eine Sicherheitseinrichtung für Kraftfahrzeuge beschrieben, bei der ein erster Transponder im Fahrzeug installiert ist und ein Fragecodesignal aussendet, und ein zweiter, tragbarer Transponder dieses Signal empfängt und ein Antwortcodesignal aussendet, das in einem Codesignalvergleicher geprüft wird. Dabei sendet der zweite Transponder das Signal nur über eine kurze Reichweite und trägt somit zur Sicherheit vor Diebstahl bei, da eine weiter entfernte Person das Fahrzeug nicht öffnen kann. Die Sicherheit kann hierbei noch weiter erhöht werden, indem für den Eingang des Antwortcodesignals ein Zeitfenster vorgegeben wird, sodass nur Antwortcodesignale berücksichtigt werden, die innerhalb einer vorgegebenen Laufzeit am Fahrzeug eintreffen. Später eintreffende Signale werden für die Öffnung des Fahrzeugs nicht berücksichtigt.

In der DE 10 2009 002 448 A1 wird ein Verfahren zur Kontrolle einer Zugangsberechtigung für ein Kraftfahrzeug bereitgestellt, bei dem mit einer fahrzeugseitigen Weckschaltung ein Funksignal ausgesendet wird, das ein vom Fahrer mitgeführter Identifikationsgeber empfängt und mit einer Auswerteschaltung überprüft. Dabei wird eine erwartete Systemlaufzeit zwischen dem Aussenden des Funksignals und dem Erhalt des Funksignals gemessen und mit einer erwarteten Systemlaufzeit verglichen. Ist diese Zeitdauer größer als ein vorgegebener Wert, wird eine Freigabe einer Schließvorrichtung unterbunden. Damit können unberechtigte oder unerwünschte Personen, die sich nicht in der Nähe des Fahrzeugs befinden, das Fahrzeug nicht öffnen.

Darüber hinaus wird in der WO 2013/050409 A1 ein Zugangssystem für ein Fahrzeug beschrieben, bei dem ein mobiles Gerät und eine Verriegelungsvorrichtung in dem Fahrzeug jeweils einen Transponder zum Empfangen und Senden niederfrequenter Signale mit einer geringen Reichweite und einen Transponder zum Empfangen und Senden hochfrequenter Signale mit einer geringen Reichweite aufweisen. Es sind zwei Betriebsmodi vorgesehen: In einem manuellen Betriebsmodus arbeitet der Transponder des mobilen Geräts im Hochfrequenzbereich und hat somit eine niedrige Reichweite, beispielsweise kleiner als 2 Meter, wohingegen in einem normalen Betriebsmodus der Transponder des mobilen Geräts im Niederfrequenzbereich arbeitet und somit eine höhere Reichweite aufweist. Wenn die Transponder des mobilen Geräts und der Verriegelungsvorrichtung miteinander kommunizieren, kann das mobile Gerät im normalen Beriebsmodus die von der Verriegelungsvorrichtung empfangenen Signale nicht mit der Reichweite beantworten. Erst wenn ein Fahrer das mobile Gerät auf einen manuellen Betriebsmodus umschaltet, werden die Antwortsignale des mobilen Geräts mit der hohen Reichweite übertragen.

In der WO 2004/114227 A1 wird ein Transpondersystem beschrieben, das aus einem tragbaren Transponder, beispielsweise ein Schlüssel, und einer Basisstation in einem Fahrzeug besteht. Die Basisstation und der Transponder führen drahtlos eine Kommunikationssequenz durch, um eine Zugangsberechtigung für das Fahrzeug zu ermitteln. Dabei werden bei Teilen der Kommunikationssequenz Signale ausgegeben, die vom Fahrer wahrgenommen werden können. Beispiele für wahrnehmbare Signale sind Tonsignale oder Lichtsignale. Diese Signale können sowohl vom Fahrer als auch von der Basisstation und dem tragbaren Transponder wahrgenommen werden. Dadurch nimmt der Benutzer wahr, wenn unerwünschte Versuche stattfinden, Zugang zum Fahrzeug zu erreichen. US2015/0048927 A1 offenbart ein weiteres mobiles Gerät sowie ein weiteres Verfahren.

Es existieren somit verschiedene Vorrichtungen und Verfahren, die bei drahtlosen Fahrzeugzugangssystemen ermöglichen, einen ungewollten Zugang zu einem Fahrzeug durch unerwünschte Personen und/oder einen Diebstahl zu verhindern.

Eine weitere Möglichkeit, bei einem drahtlosen Fahrzeugzugangssystem unerwünschte Zugangsversuche zu verhindern, besteht darin, dass das Empfangen und/oder Senden von Signalen des mobilen Geräts zu verhindern. Beispielsweise kann das mobile Gerät in einem metallischen Behälter aufbewahrt werden, so dass durch Abschirmung keine elektromagnetische Strahlung in das innere des Behälters dringen kann und das mobile Gerät auch keine Signale empfangen und/oder senden kann. In der Praxis ist dies aber schwierig durchzuführen und bringt für den Benutzer Einschränkungen mit sich, da er zusätzlich zum mobilen Gerät einen metallischen Behälter mit sich tragen muss und außerdem die Gefahr besteht, dass er vergisst, das mobile Gerät in den Behälter zu legen.

Es existieren auch kommerziell verfügbare Angriffsysteme, mit denen unerwünschte Personen sich auf einfache Art und ohne Detailkenntnis der entsprechenden Technik Zugang zu einem Fahrzeug mit einem drahtlosen Fahrzeugzugangssystem verschaffen können. Ein Beispiel dafür sind Systeme zur Funkreichweitenverlängerung, die auf dem freien Markt legal verfügbar sind und die als Diebstahlwerkzeug verwendet werden können, ohne Spuren zu hinterlassen. Dabei werden die Reichweiten der Signale, die zwischen der Sperrvorrichtung im Fahrzeug und dem mobilen Gerät des Fahrers ausgetauscht werden, verlängert, sodass eine unerwünschte Person durch geeignete Manipulation eine Verbindung zwischen dem Fahrzeug und dem mobilen Gerät des Fahrers herstellen kann, auch wenn das mobile Gerät sehr weit von dem Fahrzeug entfernt ist. Der Fahrer nimmt daher nicht wahr, dass sich eine unerwünschte Person sich Zugang zu dem Fahrzeug verschafft.

Eine Aufgabe der Erfindung besteht darin, bei einem drahtlosen Fahrzeugzugangssystem zu ermöglichen, dass ein unerwünschter Zugang zu dem Fahrzeug zuverlässig verhindert wird. Diesbezüglich wird eine ein mobiles Gerät nach Anspruch 1, ein Verfahren zur Sicherung eines Fahrzeugs nach Anspruch 8 und ein System zur Sicherung des Fahrzeugs nach Anspruch 10 bereitgestellt. Die Unteransprüche definieren weitere Ausführungsbeispiele.

Die Erfindung betrifft somit ein mobiles Gerät, welches eine Steuereinheit und mindestens ein Steuermittel umfasst. Die Steuereinheit in dem mobilen Gerät ist eingerichtet, ein erstes Signal von einer Sperrvorrichtung in einem Fahrzeug zu empfangen und in Reaktion auf das erste Signal durch Senden eines zweiten Signals an die Sperrvorrichtung eine Authentifizierung des mobilen Geräts einzuleiten und bei Erfolg der Authentifizierung das Fahrzeug zu entsperren oder zu sperren. Weiterhin ist die Steuereinheit eingerichtet, abhängig von einem Zustand des mindestens einen Steuermittels das Senden des zweiten Signals zu unterbinden. Das Steuermittel ist zur Betätigung einer Standardfunktion einsetzbar. Gleichzeitig mit der Betätigung der Standardfunktion wird das Senden des zweiten Signals unterbunden.

Durch die Deaktivierbarkeit des zweiten Signals hat der Fahrer die Möglichkeit, eine Signalisierungssequenz zwischen der Sperrvorrichtung und dem mobilen Gerät zu unterbrechen, um so eine unerwünschte Entsperrung des Fahrzeugs zu unterbinden.

Das mobile Gerät kann bei einem Ausführungsbeispiel derart eingerichtet sein, dass das erste Signal ein Niederfrequenzsignal ist und das zweite Signal ein Hochfrequenzsignal ist. Damit können vorteilhaft die verschiedenen Reichweiten der beiden Frequenzbereiche genutzt werden.

Das Sperren und Entsperren des Fahrzeugs kann das Sperren und Entsperren einer Wegfahrsperre, und/oder das Sperren und Entsperren eines Zündschlosses, und/oder das Sperren und Entsperren eines Türverriegelungsmechanismus des Fahrzeugs umfassen.

In einem weiteren Ausführungsbeispiel kann das mindestens eine Steuermittel an dem mobilen Gerät mindestens eine Taste, mindestens einen Schalter oder mindestens einen berührungsempfindlichen Sensor umfassen. Somit können dem Benutzer verschiedene Möglichkeiten bereitgestellt werden, auf komfortable Weise das Senden des zweiten Signals zu unterbinden oder andere Funktionalitäten im Bezug auf die Steuerung des Fahrzeugs auszuführen.

Darüber hinaus kann das mobile Gerät ausgestaltet sein, abhängig von dem Zustand des mindestens einen Steuermittels das Senden des zweiten Signals wieder zu aktivieren. Damit ist der Fahrer flexibel dazu in der Lage, aktiv das unterbundene Senden des zweiten Signals bei Bedarf wieder zu aktivieren, so dass die Sperrvorrichtung in dem Fahrzeug betätigt werden kann.

Bei einem weiteren Ausführungsbeispiel kann das mobile Gerät so eingerichtet sein, dass das Unterbinden und das Aktivieren des Sendens des zweiten Signals durch dasselbe Steuermittel ausgeführt wird. Damit kann die Anordnung der Steuermittel auf dem mobilen Gerät vereinfacht werden.

Das mobile Gerät kann weiterhin eingerichtet sein, das Senden des zweiten Signals durch ein erstes Steuermittel zu unterbinden und das Senden des zweiten Signals durch ein zweites Steuermittel wieder zu aktivieren. Somit kann das Aktivieren des Sendens des zweiten Signals durch ein anderes Steuermittel veranlasst werden als das Unterbinden des Sendens des zweiten Signals. Hierdurch kann dem Fahrer eine flexiblere Handhabung der Signalsteuerung an dem mobilen Gerät ermöglicht werden.

Erfindungsgemäß wird weiterhin ein Verfahren zur Sicherung eines Fahrzeugs bereitgestellt. Bei dem Verfahren wird von einem mobilen Gerät ein erstes Signal von einer Sperrvorrichtung eines Fahrzeugs empfangen. In Reaktion auf das erste Signal wird ein zweites Signal vom mobilen Gerät an die Sperrvorrichtung gesendet, um eine Authentifizierung des mobilen Geräts einzuleiten und bei Erfolg der Authentifizierung das Fahrzeug zu entsperren oder zu sperren. Weiterhin wird abhängig von einem Zustand mindestens eines Steuermittels an dem mobilen Gerät das Senden des zweiten Signals unterbunden.

Darüber hinaus wird ein System zur Sicherung eines Fahrzeugs bereitgestellt, das ein mobiles Gerät und eine Sperrvorrichtung der oben beschriebenen Ausführungsbeispiele umfasst. Die Sperrvorrichtung ist dabei dazu ausgestaltet, abhängig von dem zweiten Signal eine Authentifizierung des mobilen Geräts durchzuführen und bei Erfolg der Authentifizierung das Fahrzeug zu entsperren oder zu sperren.

Die Erfindung wird nachfolgend unter Bezugnahme auf die beigefügten Zeichnungen anhand von Ausführungsbeispielen näher erläutert. Es zeigen:
Fig. 1 eine schematische Darstellung eines mobilen Geräts und eines Fahrzeugs mit einer Sperrvorrichtung,
Fig. 2 eine genauere Darstellung der Sperrvorrichtung von Fig. 1,
Fig. 3 ein Flussdiagramm zur Veranschaulichung eines Verfahrens zum Entsperren der Sperrvorrichtung mit einem ersten und einem zweiten Signal,
Fig. 4 ein Flussdiagramm zum Unterbinden des Sendens des zweiten Signals gemäß einem Ausführungsbeispiel der Erfindung,
Fig. 5 ein Flussdiagramm zur Veranschaulichung eines Verfahrens gemäß einem Ausführungsbeispiel der Erfindung, über welches eine Steuerung des mobilen Geräts mit einem Steuermittel bewerkstelligt werden kann.

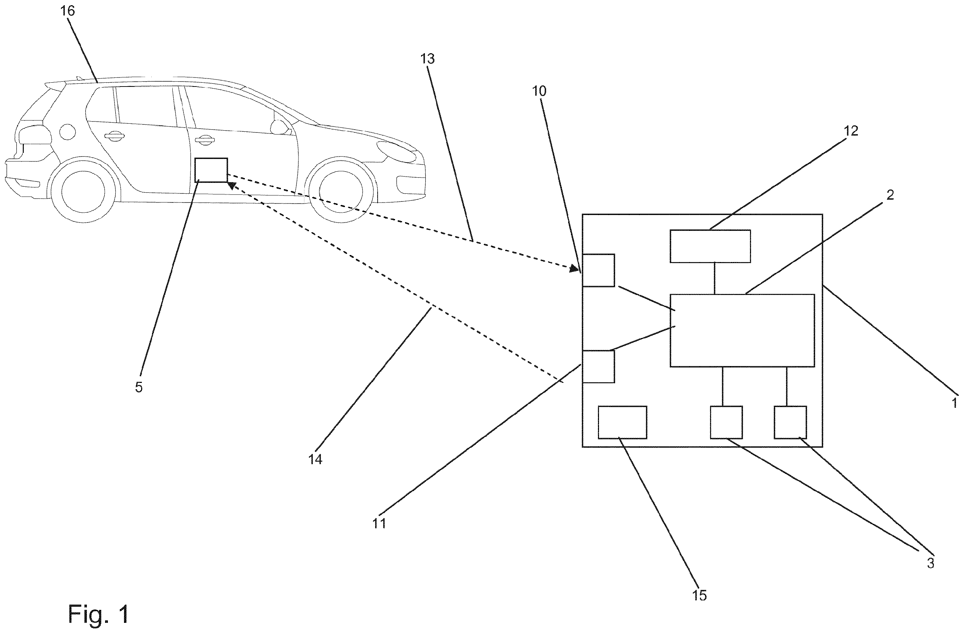

Fig. 1 zeigt eine Darstellung eines mobilen Geräts 1, welches mit einer Sperrvorrichtung 5 eines Fahrzeugs 16 zusammenwirkt. Das mobile Gerät 1 kann beispielsweise ein Funkschlüssel sein. Das mobile Gerät 1 kann jedoch auch ein Mobiltelefon, eine Chipkarte oder eine Fernbedienung sein. Wie dargestellt, weist das mobile Gerät eine Steuereinheit 2, einen Empfänger 10 und einen Sender 11 auf. Die Steuereinheit 2 ist dazu eingerichtet, ein erstes Signal 13 über den Empfänger 10 zu empfangen und ein zweites Signal 14 über den Sender 11 zu senden.

Das mobile Gerät 1 umfasst weiterhin mindestens ein Steuermittel 3, mit dem die Steuereinheit 2 gesteuert werden kann, wobei beispielsweise bestimmte Funktionen der Steuereinheit 2 aktiviert oder deaktiviert werden können. Weiterhin befindet sich an dem mobilen Gerät 1 eine Transponder 12 und eine Batterie 15 zur Stromversorgung des mobilen Geräts 1.

Das erste Signal 13 kann beispielsweise eine Schlüsselabfrage von einer Sperrvorrichtung 5 eines Fahrzeugs 16 sein. Das erste Signal 13 kann von der Steuereinheit 2 ausgewertet werden. Beispielsweise kann das erste Signal 13 von der Steuereinheit 2 authentifiziert werden. Die Schlüsselabfrage, die über das erste Signal 13 gesendet wird, hat die Aufgabe, das das zum Fahrzeug 16 gehörende mobile Gerät 1 zu identifizieren. Dazu kann die Steuereinheit 2 in einem Ausführungsbeispiel als Reaktion auf das Empfangen des ersten Signals 13 über einen Sender 11 ein zweites Signal 14 senden, das eine Authentifizierung des mobilen Geräts 1 durch die Sperrvorrichtung 5 des Fahrzeugs 16 einleitet.

Das Steuermittel 3 kann derart betätigt werden, dass das Senden des zweiten Signals 14 durch die Steuereinheit 2 unterbunden wird. Diese Funktion des Unterbindens kann beispielsweise durch einen von der Steuereinheit 2 ausgeführten Programmcode implementiert sein. Abhängig von einem Zustand des Steuermittels 3 kann entweder das Senden des zweiten Signals 14 unterbunden werden oder das Senden des zweiten Signals 14 erlaubt werden. Dadurch wird erreicht, dass das mobile Gerät 1 von der Sperrvorrichtung 5 des Fahrzeugs 16 authentifiziert werden kann, falls das Senden des zweiten Signals 14 erlaubt wird, oder alternativ nicht authentifiziert werden kann, wenn das Senden des zweiten Signals 14 unterbunden wird. Dadurch kann ein unerwünschtes Entsperren des Fahrzeugs 16 beispielsweise durch Funkreichweitenverlängerung verhindert werden, ohne dass das mobile Gerät 1 abgeschirmt oder ausgeschaltet werden muss. Das mobile Gerät kann somit weiterhin betriebsbereit bleiben, und es wird lediglich das Senden des zweiten Signals 14 aktiv unterbunden.

Das mindestens eine Steuermittel 3 ist auch gleichzeitig zur Betätigung wenigstens einer Standardfunktion des Steuermittels 3 einsetzbar, beispielsweise ein Verriegeln einer Fahrzeugtür oder eines Kofferraums des Fahrzeugs 16. Somit kann ein solches Verriegeln der Fahrzeugtür oder des Kofferraums gleichzeitig das Senden des zweiten Signals 14 unterbinden. Das Unterbinden des Sendens des zweiten Signals 14 kann durch eine weitere Betätigung des mindestens einen Steuermittels 3 wieder aufgehoben werden, so dass das Senden des zweiten Signals 14 wieder erlaubt ist. Das Unterbinden des Sendens des zweiten Signals 14 und das Aufheben der Unterbindung kann über genau ein Steuermittel 3 erfolgen, was beispielsweise durch eine zeitlich aufeinanderfolgende Betätigung des Steuermittels 3 erreicht werden kann. Alternativ kann das Unterbinden des Sendens des zweiten Signals 14 und das Aufheben der Unterbindung auch über zwei verschiedene Steuermittel 3 erfolgen. Jedes Steuermittel 3 kann dabei beispielsweise als eine Taste, ein Schalter oder ein berührungsempfindlicher Sensor realisiert sein.

Falls die Steuereinheit 2 beispielsweise wegen eines niedrigen Ladezustands der Batterie 15, wegen eines ausgeschalteten Zustands der Steuereinheit 2 oder des gesamten mobilen Geräts 1 oder wegen eines Funkstörfeldes in der Umgebung des mobilen Geräts 1 nicht funktionsfähig sein sollte, kann die Authentifizierung des mobilen Geräts 1 auch über den Transponder 12 erfolgen, der bevorzugt auch passiv funktionsfähig ist.

Das Fahrzeug 16 umfasst wie oben beschrieben die Sperrvorrichtung 5, die ausgebildet ist, das erste Signal 13 zu senden. Dieses Signal 13 wird vom mobilen Gerät 1 empfangen. Abhängig vom Betätigungszustand des mindestens einen Steuermittels 3 wird dann das zweite Signal 14 von dem mobilen Gerät 1 an die Sperrvorrichtung 5 gesendet. Die Sperrvorrichtung 5 empfängt das Signal 14 und verwendet es für eine Authentifizierung, um zu prüfen, ob das mobile Gerät 1 zum Entsperren des Fahrzeugs 16 berechtigt ist. Ist die Authentifizierung erfolgreich, entsperrt die Sperrvorrichtung 5 das Fahrzeug 16. Falls die Authentifizierung nicht erfolgreich ist, hält die Sperrvorrichtung 5 das Fahrzeug 16 in einem gesperrten Zustand.

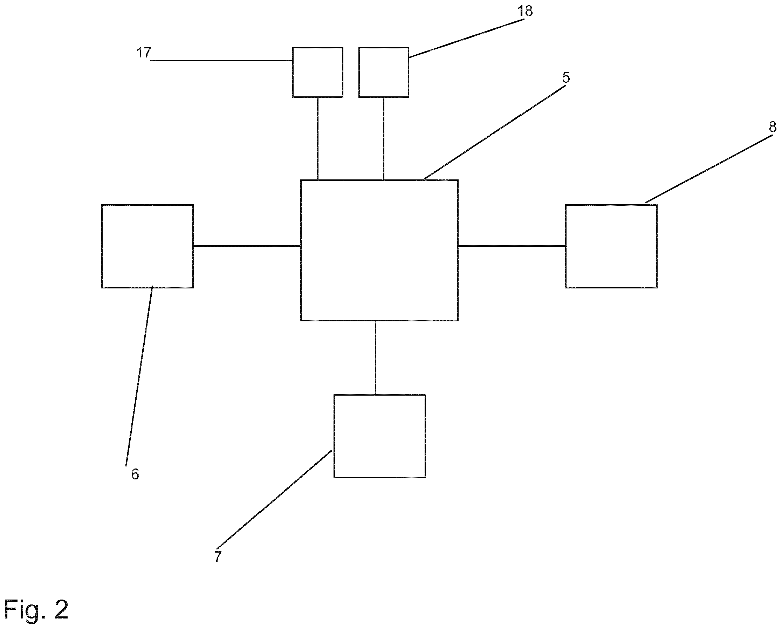

Fig. 2 zeigt eine genauere Darstellung der Sperrvorrichtung 5. Dabei ist an die Sperrvorrichtung 5 eine LF-Antenne 17 und eine HF-Antenne 18 angeschlossen, mit denen das erste Signal 13 gesendet wird und das zweite Signal 14 empfangen wird. Dabei ist die LF-Antenne 17 ausgebildet, Signale im Niederfrequenzbereich zu senden und zu empfangen. Entsprechend ist die HF-Antenne ausgebildet, Signale im Hochfrequenzbereich zu senden und empfangen. Damit kann beispielsweise das erste Signal 13 an das mobile Gerät 1 gesendet werden und das zweite Signal 14 von dort empfangen werden. Das zweite Signal 14 wird authentifiziert und bei erfolgreicher Authentifizierung wird das Fahrzeug über den Türverriegelungsmechanismus 8 entsperrt. Ist die Authentifizierung nicht erfolgreich, hält der Türverriegelungsmechanismus 8 das Fahrzeug im gesperrten Zustand.

Signale, die im Hochfrequenzbereich gesendet werden, haben abhängig von der Wellenlänge eine niedrige Reichweite, was vorteilhaft dazu genutzt werden kann, dass Signale 13, 14 zwischen dem Fahrzeug 16 und dem mobilen Gerät 1 nur dann ausgetauscht werden können, wenn sich das Fahrzeug 16 und das mobile Gerät 1 unterhalb einer Schwellwert-Distanz befinden. Eine derartige Schwellwert-Distanz kann ein einem Ausführungsbeispiel 4 Meter betragen. Andere Distanzen, beispielsweise 1,5 Meter, sind ebenfalls möglich. Sind das Fahrzeug 16 und das mobile Gerät 1 weiter voneinander entfernt als die Schwellwert-Distanz, können die gesendeten Signale 13, 14 den Empfänger nicht erreichen, so dass eine Betätigung der Sperrvorrichtung 5 durch das mobile Gerät 1 nicht möglich ist, sofern keine zusätzliche, funkreichweitenverlängernden Maßnahmen getroffen werden.

Funkreichweitenverlängernde Maßnahmen können dann angewendet werden, wenn das mobile Gerät 1 beispielsweise in einer bestimmten Distanz zum Fahrzeug verloren gegangen ist, so das trotz der Distanz, die zwischen dem Fahrzeug und dem verlorenen mobilen Gerät 1 liegt, und die größer als die Schwellwert-Distanz ist, eine Funkverbindung zum Austausch der Signale 13, 14 hergestellt werden kann. Damit kann das Fahrzeug 16 trotz des verlorenen mobilen Geräts 1 entsperrt werden. Es ist jedoch auch möglich, dass unerwünschte Personen ohne Wissen und Einwilligung des Benutzers des mobilen Geräts 1 funkreichweitenverlängernde Maßnahmen nutzen, um sich unerwünscht Zugang zum Fahrzeug 16 zu verschaffen. Die vorliegende Erfindung kann durch Unterbinden des Sendens des zweiten Signals 14 die Möglichkeiten der Funkreichweitenverlängerung eliminieren und somit die Sicherheit erhöhen.

Werden die Signale 13, 14 im Niederfrequenzbereich gesendet, können diese über größere Distanzen übertragen werden. Bei einem Ausführungsbeispiel kann die Distanz mehrere hundert Meter betragen. Für Anwendungen, die eine hohe Reichweite erfordern, kann die LF-Antenne 17 zum Senden und Empfangen der Signale 13, 14 verwendet werden.

Wie dargestellt, kann die Sperrvorrichtung 5 mit einer Wegfahrsperre 6 gekoppelt sein, die ebenfalls bei einer erfolgreichen Authentifizierung des mobilen Geräts 1 entsperrt wird, und somit das Wegfahren des Fahrzeugs 16 erlaubt.

Weiterhin kann die Sperrvorrichtung 5 mit einem Zündschloss 7 gekoppelt sein, sodass das Fahrzeug 16 mit dem mobilen Gerät 1 gestartet werden kann. Die Funktionalität des Zündschlosses 7 kann auch einen Startknopf zum Starten des Fahrzeugs 16 beinhalten.

Die Wegfahrsperre 6, das Zündschloss 7 und der Türverriegelungsmechanismus 8 können gleichzeitig oder unabhängig voneinander durch die Sperrvorrichtung 5 gesperrt oder entsperrt werden. Welche der genannten Komponenten gesperrt oder entsperrt wird, kann beispielsweise von der Beschaffenheit des empfangenen Signals 14 abhängen. Bei einem Ausführungsbeispiel kann das mobile Gerät 1 ein Signal 14 senden, das nur das Entsperren des Türverriegelungsmechanismus 8 verursacht, nicht jedoch die Wegfahrsperre 6 entsperrt.

Falls das mobile Gerät 1 eine niedrige Batteriespannung aufweist oder stromlos ist, kann auch der Transponder 12 des mobilen Geräts 1 die Sperrvorrichtung 5 entsperren. Dabei kann das mobile Gerät 1 in das Türschloss des Fahrzeugs 16 oder in das Zündschloss 7 gesteckt oder anderweitig in deren unmittelbare Nähe gebracht werden.

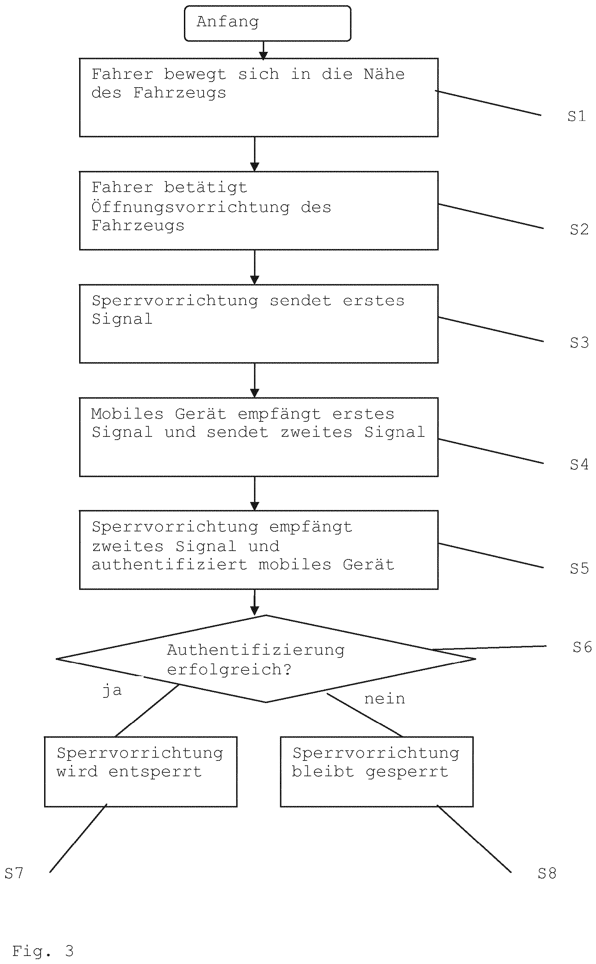

Fig. 3 veranschaulicht ein Verfahren zum Entsperren der Sperrvorrichtung mit einem ersten und einem zweiten Signal. Dabei bewegt sich in einem ersten Schritt S1 eine Person mit dem mobilen Gerät 1 in die Nähe des Fahrzeugs 16. Befindet sich die Person in einer Distanz zum Fahrzeug, die unterhalb eines bestimmten Distanz-Schwellwerts liegt, befindet er sich innerhalb der Funkreichweite der Sperrvorrichtung und des mobilen Geräts, so das beide miteinander kommunizieren können und Signale untereinander austauschen können.

In einem Schritt S2 kann nun die Person eine Öffnungsvorrichtung des Fahrzeugs 16 betätigen, so dass als Reaktion darauf die Sperrvorrichtung 5 in dem Fahrzeug 16 in einem Schritt S3 das erste Signal 13 an das mobile Gerät 1 sendet. Die Öffnungsvorrichtung kann beispielsweise ein Türgriff einer Fahrzeugtür sein. In manchen Szenarien kann die Betätigung der Öffnungsvorrichtung auch unterbleiben, und der Schritt S3 zum Senden des ersten Signals 13 durch Annäherung des mobilen Geräts 1 an das Fahrzeug 16 ausgelöst werden.

In einem Schritt S4 empfängt das mobile Gerät 1 das erste Signal 13. Das erste Signal 13 kann dann von der Steuereinheit 2 des mobilen Geräts 1 authentifiziert werden, so dass ein weiteres Senden von Signalen nur dann ausgeführt wird, wenn das Fahrzeug 16 bzw. die Sperrvorrichtung 5 authentifiziert werden konnte. Als Antwort auf das Empfangen des ersten Signals 13 und optional bei Erfolg der Authentifizierung sendet das mobile Gerät 1 das zweite Signal 14.

In einem Schritt S5 empfängt die Sperrvorrichtung 5 das zweite Signal 14 und authentifiziert das mobile Gerät 1. Ist die Authentifizierung erfolgreich, wird im Schritt S6 geprüft, ob eine Entsperrung des Fahrzeugs 16 zu veranlassen ist. Letzteres kann beispielsweise abhängig von in dem zweiten Signal 14 oder separat von dem mobilen Gerät 1 gesendeten Steuercodes erfolgen.

In einem Schritt S7 wird das Fahrzeug 16 entsperrt. Hierbei können beispielsweise die Wegfahrsperre und/oder das Zündschloss 7 und/oder der Startknopf und/oder der Türverriegelungsmechanismus 8 freigegeben werden.

Ist die Authentifizierung des mobilen Geräts 1 nicht erfolgreich, bleibt in einem Schritt S8 das Fahrzeug 16 gesperrt, d.h. die Wegfahrsperre 6 und/oder das Zündschloss 7 und/oder der Startknopf und/oder der Türverriegelungsmechanismus 8 werden nicht freigegeben.

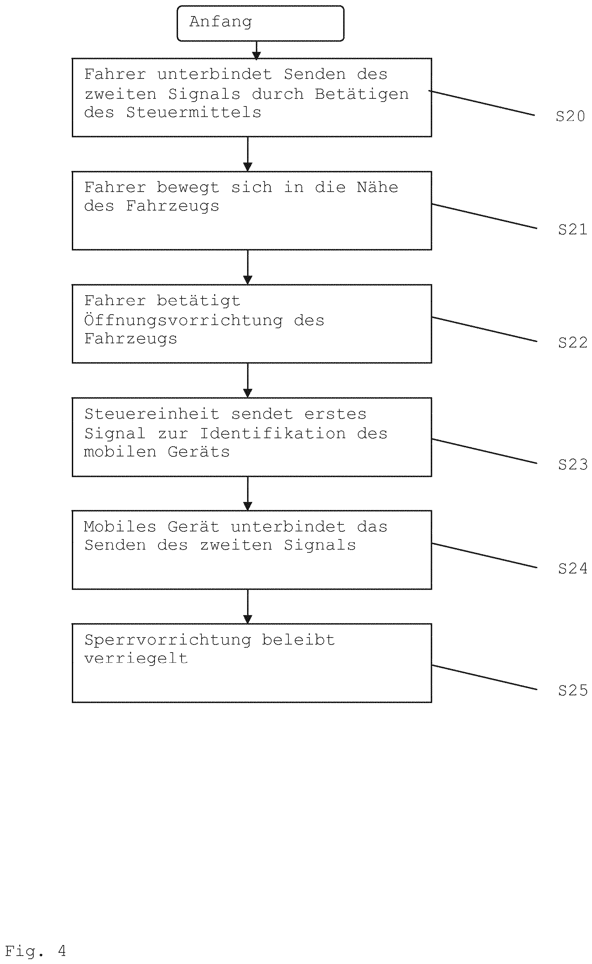

Fig. 4 veranschaulicht näher ein Verfahren zum Unterbinden des Sendens des zweiten Signals 14. Dabei betätigt die Person in einem Schritt S20 das Steuermittel 3 an dem mobilen Gerät 1 und unterbindet damit das Senden des zweiten Signals 14. Das mobile Gerät 1 kann dabei eingeschaltet bleiben und weiterhin für andere Funktionen als das Senden des zweiten Signals 14 einsetzbar sein.

In einem Schritt S21 bewegt sich die Person mit dem mobilen Gerät 1 in die Nähe des Fahrzeugs 16 und unterschreitet somit den Distanz-Schwellwert, bei dem das Empfangen gesendeter Signale möglich ist. Betätigt nun die Person in einem Schritt S22 die Öffnungsvorrichtung des Fahrzeugs 16, sendet die Sperrvorrichtung 5 in einem Schritt S23 das erste Signal 13. In manchen Szenarien kann auf das Betätigen der Öffnungsvorrichtung verzichtet werden und lediglich die Annäherung des mobilen Geräts 1 an das Fahrzeug 16 das Senden des ersten Signals 13 auslösen.

In einem Schritt S24 unterbindet das mobile Gerät 1 das Senden des zweiten Signals, weil im Schritt 20 das Steuermittel 3 entsprechend betätigt wurde. Somit erfolgt keine Authentifizierung des mobilen Geräts, und in einem Schritt S25 bleibt das Fahrzeug 16 gesperrt. Es kann auch dann kein Entsperren des Fahrzeugs 16 stattfinden, wenn eine Funkreichweitenverlängerung vorgenommen wurde und das mobile Gerät 1 das erste Signal 13 auch dann von der Sperrvorrichtung 5 empfangen kann, wenn es sich weiter entfernt als der Distanz-Schwellwert zwischen dem mobilen Gerät 1 und dem Fahrzeug 16 befindet.

Wenn die Person durch ein entsprechendes Betätigen des Steuermittels 3 des mobilen Geräts 1 das Unterbinden des Sendens des zweiten Signals 14 aufhebt, ist das Senden des zweiten Signals 14 wieder erlaubt. Wenn nun die Person sich in die Nähe des Fahrzeugs 16 bewegt oder bereits dort ist, kann sie wie im Zusammenhang mit Fig. 3 erläutert die Öffnungsvorrichtung des Fahrzeugs 16 betätigen und damit das Fahrzeug 16 entsperren.

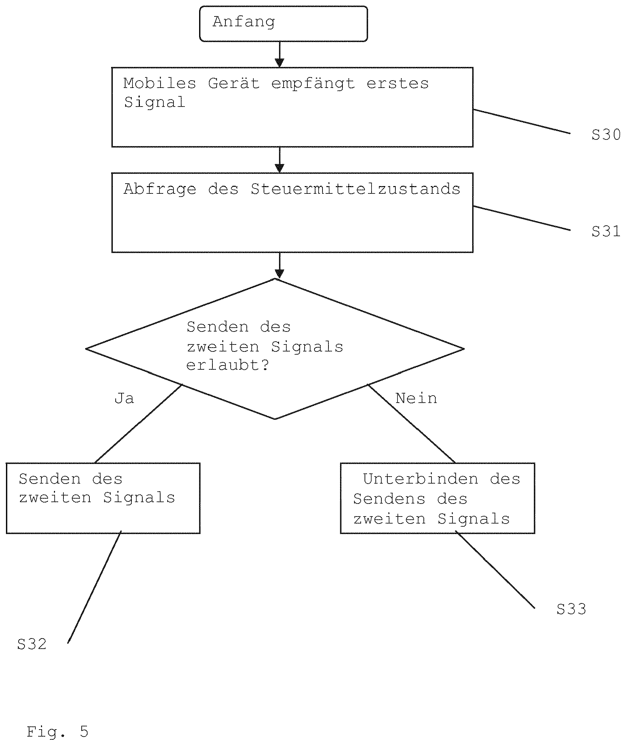

Fig. 5 veranschaulicht ein Verfahren zur Steuerung des mobilen Geräts 1 mit dem Steuermittel 3. Dabei empfängt das mobile Gerät 1 in einem Schritt S30 das erste Signal 13 von der Sperrvorrichtung 5 des Fahrzeugs 16. In einem Schritt S31 fragt die Steuereinheit 2 den Zustand des Steuermittels 3 ab. Das Steuermittel 3 kann dabei beispielsweise einen Zustand "Ein" oder "Aus" aufweisen. Hierbei versteht es sich, dass dieser Zustand abhängig von der Realisierung des Steuermittels 3 auf verschiedene Weise definiert sein kann, z.B. durch einen Schalterzustand oder eine Abfolge von Tastenbetätigungen. Wenn das Steuermittel 3 den "Ein"-Zustand aufweist, bedeutet dies, dass das Senden des zweiten Signals 14 erlaubt ist, und es wird in einem Schritt S32 das zweite Signal 14 gesendet.

Ist der Zustand des Steuermittels "Aus", wird das Senden des zweiten Signals 14 in einem Schritt S33 unterbunden. Somit kann das Fahrzeug 16 nicht entsperrt werden.

### Bezugszeichenliste

- 1: Mobiles Gerät
- 2: Steuereinheit
- 3: Steuermittel
- 5: Sperrvorrichtung
- 6: Wegfahrsperre
- 7: Zündschloss
- 8: Türverriegelungsmechanismus
- 10: Empfänger
- 11: Sender
- 12: Transponder
- 13: erstes Signal
- 14: zweites Signal
- 15: Batterie
- 16: Fahrzeug
- 17: LF-Antenne
- 18: HF-Antenne
- S1 - S8: Verfahrensschritte
- S20 - S25: Verfahrensschritte
- S30 - S33: Verfahrensschritte

## Patentansprüche

1. Mobiles Gerät, umfassend:
eine Steuereinheit (2), die eingerichtet ist, ein erstes Signal (13) von einer Sperrvorrichtung (5) in einem Fahrzeug (16) zu empfangen und in Reaktion auf das erste Signal (13) durch Senden eines zweiten Signals (14) an die Sperrvorrichtung (5) eine Authentifizierung des mobilen Geräts (1) einzuleiten und bei Erfolg der Authentifizierung das Fahrzeug (16) zu entsperren oder zu sperren, **gekennzeichnet durch**
mindestens ein Steuermittel (3) an dem mobilen Gerät (1), wobei die Steuereinheit (2) eingerichtet ist, abhängig von einem Zustand des mindestens einen Steuermittels (3) das Senden des zweiten Signals (14) zu unterbinden,
wobei das Steuermittel (3) zur Betätigung einer Standardfunktion einsetzbar ist, und
wobei gleichzeitig mit der Betätigung der Standardfunktion das Senden des zweiten Signals (14) unterbunden wird.

2. Mobiles Gerät nach Anspruch 1, **dadurch gekennzeichnet, dass** das erste Signal (13) ein Niederfrequenzsignal ist und das zweite Signal (14) ein Hochfrequenzsignal ist.

3. Mobiles Gerät nach Anspruch 1 oder 2, **dadurch gekennzeichnet, dass** das Sperren und Entsperren des Fahrzeugs (16) das Sperren und Entsperren einer Wegfahrsperre (6), und/oder eines Zündschlosses (7), und/oder eines Türverriegelungsmechanismus (8) des Fahrzeugs (16) umfasst.

4. Mobiles Gerät nach einem der Ansprüche 1 - 3, **dadurch gekennzeichnet, dass** das mindestens eine Steuermittel (3) an dem mobilen Gerät (1) mindestens eine Taste, mindestens einen Schalter oder mindestens einen berührungsempfindlichen Sensor umfasst.

5. Mobiles Gerät nach einem der Ansprüche 1 - 4, **dadurch gekennzeichnet, dass** abhängig von dem Zustand des mindestens einen Steuermittels (3) das Senden des zweiten Signals (14) wieder aktivierbar ist.

6. Mobiles Gerät nach einem der Ansprüche 1 - 5, **dadurch gekennzeichnet, dass** das Unterbinden und das Aktivieren des Sendens des zweiten Signals (14) durch dasselbe Steuermittel (3) ausgeführt wird.

7. Mobiles Gerät nach einem der Ansprüche 1 - 6, **dadurch gekennzeichnet, dass** das Senden des zweiten Signals (14) durch ein erstes Steuermittel (3) zu unterbinden ist und das Senden des zweiten Signals (14) durch ein zweites Steuermittel (3) aktivierbar ist.

8. Verfahren zur Sicherung eines Fahrzeugs, umfassend
- Empfangen eines ersten Signals (13) von einer Sperrvorrichtung (5) des Fahrzeugs (16) durch ein mobiles Gerät (1),
- in Reaktion auf das erste Signal (13), Senden eines zweiten Signals (14) vom mobilen Gerät (1) an die Sperrvorrichtung (5), um eine Authentifizierung des mobilen Geräts (1) einzuleiten und bei Erfolg der Authentifizierung das Fahrzeug (16) zu entsperren oder zu sperren,
**dadurch gekennzeichnet,**
**dass** abhängig von einem Zustand mindestens eines Steuermittels (3) an dem mobilen Gerät (1) das Senden des zweiten Signals (14) unterbunden wird,
**dass** das Steuermittel (3) zur Betätigung einer Standardfunktion einsetzbar ist, und dass gleichzeitig mit der Betätigung der Standardfunktion das Senden des zweiten Signals (14) unterbunden wird.

9. System zur Sicherung eines Fahrzeugs, umfassend:
- ein mobiles Gerät (1) nach einem der Ansprüche 1-7, und
- die Sperrvorrichtung (5) in dem Fahrzeug (16),
wobei die Sperrvorrichtung (5) dazu ausgestaltet ist, abhängig von dem zweiten Signal (14) eine Authentifizierung des mobilen Geräts (1) durchzuführen und bei Erfolg der Authentifizierung das Fahrzeug (16) zu entsperren oder zu sperren.

## Claims

1. Mobile device comprising:
a control unit (2) that is arranged to receive a first signal (13) from a locking apparatus (5) in a vehicle (16) and to initiate authentication of the mobile device (1) in reaction to the first signal (13) by sending a second signal (14) to the locking apparatus (5) and to unlock or lock the vehicle (16) if the authentication is successful, **characterized by** at least one control means (3) on the mobile device (1), wherein the control unit (2) is arranged to prevent the sending of the second signal (14) in dependence of a state of the at least one control means (3),
wherein the control means (3) is operable to actuate a standard function, and
wherein, simultaneously with actuation of the standard function, the sending of the second signal (14) is prevented.

2. Mobile device according to Claim 1, **characterized in that**
the first signal (13) is a low-frequency signal and the second signal (14) is a high-frequency signal.

3. Mobile device according to Claim 1 or 2,
**characterized in that**
the locking and unlocking of the vehicle (16) comprises the locking and unlocking of an immobilizer (6), and/or of an ignition lock (7), and/or of a door locking mechanism (8) of the vehicle (16).

4. Mobile device according to one of Claims 1-3,
**characterized in that**
the at least one control means (3) on the mobile device (1) comprises at least one key, at least one switch or at least one touch-sensitive sensor.

5. Mobile device according to one of Claims 1-4,
**characterized in that**
the sending of the second signal (14) is re-activatable in dependence of the state of the at least one control means (3).

6. Mobile device according to one of Claims 1-5,
**characterized in that**
the preventing and the activating of the sending of the second signal (14) is carried out by the same control means (3).

7. Mobile device according to one of Claims 1-6,
**characterized in that**
the sending of the second signal (14) is prevented by a first control means (3) and the sending of the second signal (14) is activatable by a second control means (3).

8. Method for securing a vehicle, comprising:
- receiving a first signal (13) from a locking apparatus (5) of the vehicle (16) by a mobile device (1),
- in reaction to the first signal (13), sending a second signal (14) from the mobile device (1) to the locking apparatus (5) in order to initiate authentication of the mobile device (1) and to unlock or lock the vehicle (16) if the authentication is successful,
**characterized**
**in that** the sending of the second signal (14) is prevented in dependence of a state of at least one control means (3) on the mobile device (1),
**in that** the control means (3) is operable to actuate a standard function, and
**in that**, simultaneously with actuation of the standard function, the sending of the second signal (14) is prevented.

9. System for securing a vehicle, comprising:
- a mobile device (1) according to one of Claims 1-7, and
- the locking apparatus (5) in the vehicle (16),
wherein the locking apparatus (5), in dependence of the second signal (14), is configured to perform an authentication of the mobile device (1) and to unlock or lock the vehicle (16) if the authentication is successful.

## Revendications

1. Appareil mobile comprenant :
une unité de commande (2) qui est conçue pour recevoir un premier signal (13) d'un dispositif de verrouillage (5) présent dans un véhicule (16) et pour initier une authentification de l'appareil mobile (1) en réponse au premier signal (13) en transmettant un deuxième signal (14) au dispositif de verrouillage (5), et pour déverrouiller ou verrouiller le véhicule (16) après une authentification réussie, **caractérisé par** au moins un moyen de commande (3) présent sur l'appareil mobile (1), dans lequel l'unité de commande (2) est conçue pour inhiber la transmission du deuxième signal (14) en fonction d'un état dudit au moins un moyen de commande (3),
dans lequel le moyen de commande (3) est utilisé pour actionner une fonction standard, et dans lequel la transmission du deuxième signal (14) en même temps que l'actionnement de la fonction standard est inhibée.

2. Appareil mobile selon la revendication 1, **caractérisé en ce que** le premier signal (13) est un signal à basse fréquence et **en ce que** le deuxième signal (14) est un signal à haute fréquence.

3. Appareil mobile selon la revendication 1 ou 2, **caractérisé en ce que** le verrouillage et le déverrouillage du véhicule (16) comprennent le verrouillage et le déverrouillage d'un dispositif d'immobilisation (6) et/ou d'une serrure de contact (7) et/ou d'un mécanisme de verrouillage de porte (8) du véhicule (16).

4. Appareil mobile selon l'une des revendications 1 à 3, **caractérisé en ce que** ledit au moins un moyen de commande (3) présent sur l'appareil mobile (1) comprend au moins une touche, au moins un interrupteur ou au moins un capteur tactile.

5. Appareil mobile selon l'une des revendications 1 à 4, **caractérisé en ce que** la transmission du deuxième signal (14) est réactivée en fonction de l'état dudit au moins un moyen de commande (3).

6. Appareil mobile selon l'une des revendications 1 à 5, **caractérisé en ce que** l'inhibition et l'activation de la transmission du deuxième signal (14) sont effectuées par le même moyen de commande (3).

7. Appareil mobile selon l'une des revendications 1 à 6, **caractérisé en ce que** la transmission du deuxième signal (14) doit être inhibée par un premier moyen de commande (3) et **en ce que** la transmission du deuxième signal (14) est activée par un deuxième moyen de commande (3).

8. Procédé de sécurisation d'un véhicule, comprenant
- la réception d'un premier signal (13) d'un dispositif de verrouillage (5) du véhicule (16) par un dispositif mobile (1),
- en réponse au premier signal (13), la transmission d'un deuxième signal (14) du dispositif mobile (1) au dispositif de verrouillage (5) pour initier l'authentification du dispositif mobile (1) et pour déverrouiller ou verrouiller le véhicule (16) après une authentification réussie,
**caractérisé en ce que**
la transmission du deuxième signal (14) est inhibée en fonction d'un état d'au moins un moyen de commande (3) présent sur l'appareil mobile (1), **en ce que** le moyen de commande (3) est utilisé pour actionner une fonction standard et **en ce que** la transmission du deuxième signal (14) est inhibée en même temps que l'actionnement de la fonction standard.

9. Système de sécurisation d'un véhicule comprenant :
- un appareil mobile (1) selon l'une des revendications 1 à 7, et
- le dispositif de verrouillage (5) dans le véhicule (16),
dans lequel le dispositif de verrouillage (5) est conçu pour effectuer une authentification de l'appareil mobile (1) en fonction du deuxième signal (14) et pour déverrouiller ou verrouiller le véhicule (16) lorsque l'authentification a réussi.
